# EUROPÄISCHE PATENTSCHRIFT

(11) **EP 1 293 803 B1**
(45) Veröffentlichungstag und Bekanntmachung des Hinweises auf die Patenterteilung: **12.09.2012**
(21) Anmeldenummer: 02015205.4
(22) Anmeldetag: 09.07.2002
(51) Int. Cl.: G01S 15/93

(54) **Verfahren zur Abstandsmessung mittels Ultraschall**
Method for ranging by means of ultrasound
Procédé de mesure de distance au moyen d'ultrason

(30) Priorität: 14.09.2001 DE 10145292
(43) Veröffentlichungstag der Anmeldung: 19.03.2003
(73) Patentinhaber: WABCO GmbH, 30453 Hannover (DE)
(72) Erfinder: Illnicki, Gregor, 30890 Barsinghausen (DE); Paulmann, Mark-Holger, 30419 Hannover (DE)
(74) Vertreter: Schrödter, Manfred

(56) Entgegenhaltungen:
- DE-B1- 2 907 582
- GB-A- 2 315 628
- US-A- 2 981 942
- US-A- 4 524 356
- US-A- 4 551 722
- US-A- 4 606 015
- US-A- 5 177 711
- PATENT ABSTRACTS OF JAPAN vol. 007, no. 134 (P-203), 11. Juni 1983 (1983-06-11) & JP 58 050484 A (KAZUO OKADA;OTHERS: 01), 24. März 1983 (1983-03-24)
- PATENT ABSTRACTS OF JAPAN vol. 011, no. 260 (P-608), 22. August 1987 (1987-08-22) & JP 62 064973 A (SHINKO ELECTRIC CO LTD), 24. März 1987 (1987-03-24)

## Beschreibung

Die Erfindung bezieht sich auf ein Verfahren zur Abstandsmessung mittels Ultraschall gemäß dem Oberbegriff des Patentanspruchs 1.

Ein derartiges Verfahren ist beispielsweise aus der DE 197 44 185 A1 bekannt. Aus der genannten Schrift geht hervor, daß bei einer Einrichtung zur Abstandsmessung für Pkw mittels Ultraschall mehrere Ultraschallwandler benutzt werden. Dabei werden die gleichen Wandler sowohl zum Senden als auch zum Empfang verwendet. Für große Reichweiten werden lange Sendeimpulse benutzt, für kleine Reichweiten kurze Sendeimpulse. Die Impulslänge ist umschaltbar. Dabei gehören die kurzen Impulslängen zu einem sequentiellen Betrieb, während die langen Impulslängen bei einem gleichzeitigen Betrieb mehrerer Ultraschallwandler angewendet werden. Alternativ können auch dann lange Impulse angewendet werden, falls bei kurzen Impulsen kein Echo erkannt worden ist.

Nachteilig an der bekannten Anordnung ist, daß die Pulslängen zwar für kurze sowie für lange Entfernungen optimiert sind, aber für mittlere Entfernungen ungünstig sein können. Hier kann sich insbesondere das Abkling-Verhalten (Diagnose- Echo) der verwendeten Ultraschallgeber negativ auswirken, da das Diagnose- Echo bei zu langer Dauer reflektierte Impulse von nahen Gegenständen überdecken kann.

Aus der DE 196 07 788 A1 ist weiter bekannt, eine Ultraschall-Abstandsmessung bei einem Fahrzeug anzuwenden, das rückwärts an ein Hindernis heranfährt. Wird auf diese Weise ein Hindernis erkannt, wird in einem ersten Abstandsbereich zum Hindernis die Fahrzeuggeschwindigkeit durch Steuerung der Leistung der Antriebseinheit des Fahrzeugs begrenzt, und in einem zweiten Abstandsbereich Bremskraft in den Radbremsen des Fahrzeugs aufgebaut.

Weiter ist aus den PATENT ABSTRACTS OF JAPAN, Bd. 007, Nr. 134 (P-203), 11. Juni 1983 & JP 58 050484 A (KAZUO OKADA; OTHERS: 01), 24. März 1983 eine Führungsanordnung zum Rückwärtsfahren von Automobilen bekannt. Hierzu werden nach rückwärts gerichtete Ultraschallpulse wiederholt ausgesendet, wobei die Pulsweite und die Wiederholungsrate in Abhängigkeit zur gemessenen Entfernung zum Hindernis geändert werden.

Weiter ist aus der DE 29 07 582 B1 ein auf unterschiedliche Lotfolgen umschaltbares Echolotgerät bekannt. Dieses ermöglicht eine selbsttätige Anpassung der Sendeimpulslänge an die jeweilige Lotfolge. Die Lotfolge wird bei Lotungen in flachen Gewässern auf kürzere Lotimpulsabstände umgeschaltet, während in tiefen Gewässern die Lotung wegen der längeren Impulslaufzeit in größeren zeitlichen Abständen erfolgt. Für Lotungen in größeren Tiefen sind außerdem Impulse höheren Energieinhalts, also Impulse höherer Amplitude oder längerer Dauer bekannt.

Schließlich ist aus der US 2981942 ein Pulsechosystem zur Entfernungsmessung bekannt, bei welchem die Pulsweite in Abhängigkeit von der Entfernung zum gemessenen Objekt variiert wird. Die Wiederholungsrate der Pulse wird dabei umgekehrt zur Entfernung des gemessenen Objektes variiert. Zum Entdecken von Objekten im Nahbereich werden kurze Pulse benutzt, während für Objekte im Fembereich längere Impulse mit höherer Energie benutzt werden.

Der Erfindung liegt die Aufgabe zugrunde, ein Verfahren zur Abstandsmessung mittels Ultraschall anzugeben, das für alle Abstände zwischen einem Fahrzeug und einem Hindernis optimale Meßergebnisse liefert.

Diese Aufgabe wird durch die im Patentanspruch 1 enthaltene Erfindung gelöst. Die Unteransprüche enthalten zweckmäßige Weiterbildungen.

Durch die gemäß der Erfindung fortwährend und in etwa stetig an die Entfernung zum Hindernis angepaßte Pulslänge des Ultraschall-Senders wird eine adaptive, besonders genaue Abstandsmessung im gesamten Meßbereich, d. h. beispielsweise zwischen 10 cm und 5 m, erzielt. Hierdurch ist auch die Erfassung derart großer Meßbereiche bei ausreichend guter Meßgenauigkeit kein Problem mehr.

Die Erfindung wird im folgenden anhand einer Zeichnung näher erläutert.

Diese zeigt in
- Fig. 1: ein schematisches Blockschaltbild einer Einrichtung zur Abstandsmessung mittels Ultraschall, in
- Fig. 2a: ein Diagramm eines Sendeimpulses (S) über der Zeit (t), und in
- Fig. 2b: ein Diagramm von aufgrund des Sendeimpulses (S) empfangenen Echos (E) über der Zeit (t) .

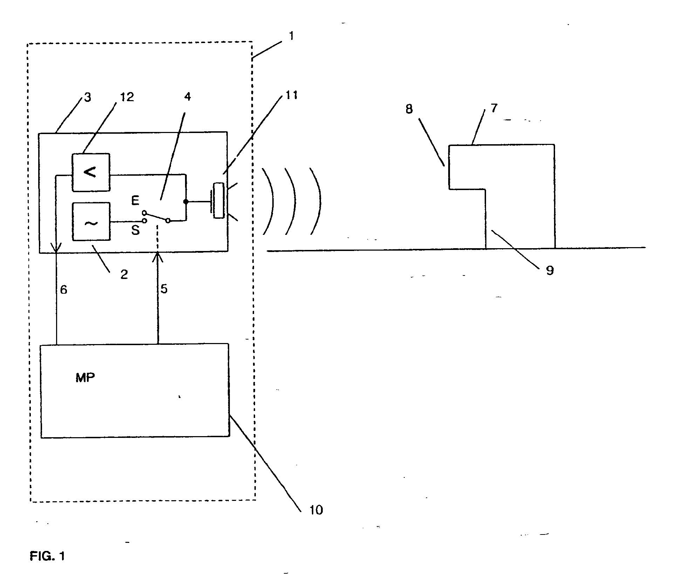

In der Fig. 1 ist schematisch als Blockschaltbild ein Ultraschall-Entfernungsmesser (1) dargestellt. Dieser ist beispielsweise an der Rückwand eines Nutzfahrzeuges angebaut, welches rückwärts auf ein Hindernis (7) zufährt. Um die Annäherungsgeschwindigkeit des Fahrzeugs an das Hindernis (7) zu regeln, und zu verhindern, daß das Fahrzeug an die Vorderkante (8) des Hindernisses oder die Wand (9) des Hindernisses anstößt, werden mittels eines Ultraschall-Sende/Empfängers (3) Schallimpulse in Richtung auf das Hindernis (7) ausgesandt und das reflektierte Echo ausgewertet. Hierzu ist im Sende-/Empfänger (3) ein Schwingquarz (11) enthalten.

Zum Senden ist ein ständig schwingender Oszillator (2) mit einer Sendefrequenz von beispielsweise 50 kHz über einen Schalter (4) an den Schwingquarz (11) anschaltbar (Stellung S = Sendung). Die jeweilige Stellung des Schalters (4) ist durch eine Elektronik (10) mit Mikroprozessoren (MP) über eine Leitung (5) steuerbar. Die Anregung des Ultraschall-Sende/Empfängers (3) erfolgt mit einer konstanten, für den jeweiligen Schwingquarz optimal angepassten Amplitude. Die Impulslänge ist über den Schalter (4) einstellbar und kann z. B. zwischen 80 und 450 Mikrosekunden liegen. In der Stellung S des Schalters (4) ist der Verstärker (12) durch geeignete Maßnahmen gegen Übersteuerung geschützt.

Der im Ultraschall-Sende/Empfänger (3) enthaltene Schwingquarz (11) wird aus Kostengründen gleichzeitig zum Empfang des vom Hindernis (7) reflektierten Echos verwendet. Hierzu wird der Schalter (4) ausgeschaltet (Stellung E = Empfang). Über eine Leitung (6) wird das empfangende Echo nach Verstärkung im Verstärker (12)zur Elektronik (10) zurückgeleitet und dort ausgewertet. Insbesondere wird von der Elektronik (10) bzw. dem Mikroprozessor MP die Laufzeit (Tl, Ta) des Sendeimpulses (Ts) zum Hindernis (7) und zurück ausgewertet und in eine Entfernung umgerechnet.

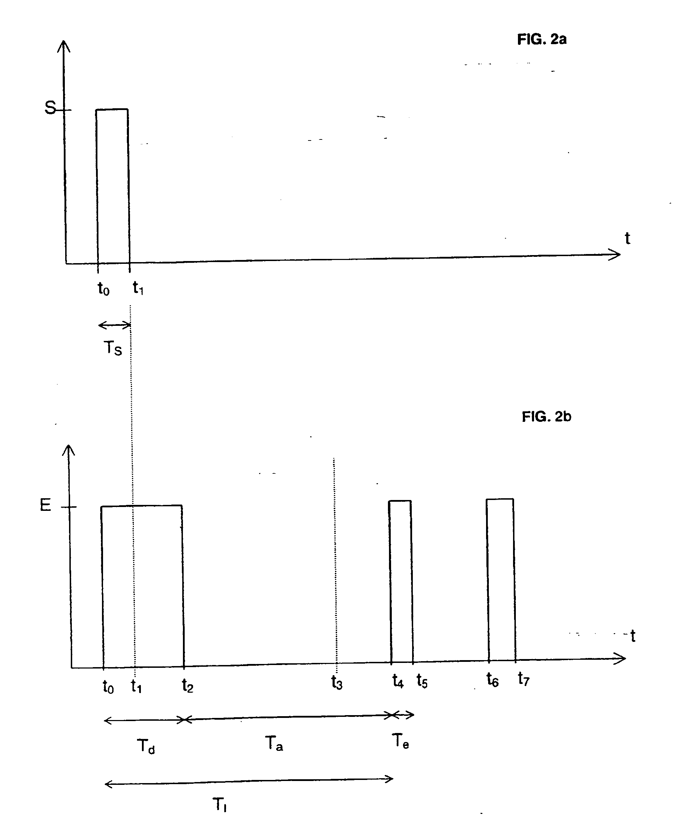

In der Fig. 2a ist über der Zeit (t) schematisch die Form eines Sendeimpulses (S) aufgezeichnet. Wie aus der Fig. 2a erkennbar, wird zum Zeitpunkt (t0) der Schalter (4) auf die Stellung S (Sendung) geschaltet. In diesem Betriebszustand ist der Schwingquarz (11) mit dem Oszillator (2) verbunden, wodurch der Sendeimpuls erzeugt wird. Dieser hat eine Länge von einigen Schwingungen (beispielsweise 5) des im Ultraschall-Sende/Empfängers (3) enthaltenen Schwingquarzes (11). Zum Zeitpunkt (t1) wird der Schalter (4) auf die Stellung E (Empfang) zurückgeschaltet. Hierdurch werden dem Verstärker (12) sowie der Elektronik (10) nach Verstreichen einer Laufzeit die empfangenen (das heißt die vom Hindernis (9) reflektierten) Schallimpulse zugeleitet.

In der Fig. 2b sind schematisch über der Zeit (t) die verschiedenen vom Sende/Empfänger (3) empfangenen Echos aufgetragen. Dabei sind zur besseren Erkennbarkeit die Amplituden der Echos gleichbleibend dargestellt, was in der Realität nicht der Fall ist. Wie man erkennt, wird zwischen den Zeitpunkten (t0 und t2) ein sogenanntes "Diagnoseecho" der Länge Td empfangen. Dieses rührt daher, daß nach der Abschaltung bzw. Trennung des Oszillators (2) vom eingebauten Schwingquarz (11) dieser noch eine Weile mechanisch nachschwingt und hierdurch auch Ausgangsimpulse erzeugt. Da diese jedoch nicht von einem Echo, das von einem Hindernis reflektiert wurde (Nutzecho), herrühren, wird das Diagnoseecho nicht ausgewertet. Dies wird durch einen in der Auswerteelektronik (10) enthaltenen Timer (nicht dargestellt) gewährleistet, der eine Auswertung der reflektierten Schallimpulse erst nach Ablauf einer Zeit (t3), also nach dem Abklingen des Diagnoseechos, zuläßt.

Im Zeitpunkt (t4) erscheint das erste reflektierte Nutzecho, das beispielsweise von der Vorderkante (8) des Hindernisses (7) reflektiert sein kann. Das Nutzecho hat eine Länge (Te) und klingt im Zeitpunkt (t5) wieder ab. Im Zeitpunkt (t6) erscheint ein weiteres Nutzecho, das beispielsweise von der Wand (9) reflektiert sein kann. Auch dieses klingt im Zeitpunkt (t7) wieder ab.

Zur Auswertung des Abstandes zwischen dem Ultraschall-Entfernungsmesser (1) und dem Hindernis (7) läßt sich die Laufzeit (Tl) zwischen dem Startzeitpunkt (t0) des Sendeimpulses (S) und dem Zeitpunkt (t4) des Eintreffens des ersten Nutzechos auswerten. Hierzu muß der Einschaltzeitpunkt (t0) des Schalters (4) in die Stellung (S) von der Elektronik (10) erfasst werden. Die zugehörige Entfernung wird in der Elektronik (10) durch bekannte, geeignete Maßnahmen ermittelt.

Zur Abstandsmessung läßt sich aber auch die Laufzeit (Ta) zwischen dem Zeitpunkt (t2) des Endes des Diagnoseechos und dem Zeitpunkt (t4) des ersten Nutzechos auswerten. Dabei ist bekannt, daß die Länge (Td) des Diagnoseechos mit der Länge (Ts) des Sendeimpulses ansteigt.

Gemäß der Erfindung wird die Länge der Sendeimpulse (Ts) so eingeregelt, daß die Länge (Td) des Diagnoseechos etwa proportional zur Laufzeit (T1 oder Ta) des vorhergehenden Sendeimpulses ist. Die Länge (Td) des Diagnoseechos ist abhängig von der Sendeimpulslänge (Ts) und vom verwendeten Schwingquarz (11). Die jeweilige Länge von Td kann auch durch Versuche ermittelt werden.

Zweckmäßig kann die Elektronik (10) auch so programmiert werden, daß bei einem Verhältnis von (Ta/Ts) > einem Grenzwert (B) die Impulslänge (Ts) bis zu einem maximalen Wert angehoben wird, bei einem Verhältnis (Ta/Ts) zwischen zwei Grenzwerten (A) und (B) die Impulslänge (Ts) gleichgelassen wird, und bei einem Verhältnis (Ta/Ts) < einem Grenzwert (A) die Impulslänge (Ts) bis zu einem minimalen Wert abgesenkt wird, wobei der Grenzwert (A) kleiner als der Grenzwert (B) ist.

Weiterhin kann zweckmäßig auch so vorgegangen werden, daß bei einem Verhältnis (Ta/Td) > einem Grenzwert B die Impulslänge (Ts) bis zu einem maximalen Wert angehoben wird, bei einem Verhältnis von (Ta/Td) zwischen zwei Grenzwerten (A) und (B) die Impulslänge (Ts) gleichgelassen wird, und bei einem Verhältnis (Ta/Td) < einem Grenzwert (A) die Impulslänge (Ts) bis zu einem minimalen Wert abgesenkt wird, wobei der Grenzwert (A) kleiner als der Grenzwert (B) ist.

Dabei beträgt der Grenzwert (A) etwa 0,8 , der Grenzwert (B) etwa 1,2 , der maximale Wert etwa 400 Mikrosekunden, und der minimale Wert etwa 80 Mikrosekunden.

Die oben erwähnten Anhebungen und/oder Absenkungen können schnell oder langsam erfolgen. Die hierzu notwendigen Berechnungen werden innerhalb der Elektronik (10) durchgeführt.

Das erfindungsgemäße Verfahren kann zweckmäßig zur Messung des Abstandes zwischen einem rückwärtsfahrenden Nutzfahrzeug und einem Hindernis benutzt werden. Es ist aber auch allgemein zur Regelung der Annäherung eines Gegenstandes an ein Hindernis verwendbar.

## Patentansprüche

1. Verfahren zur Abstandsmessung mittels Ultraschall, wobei eine Laufzeit (Tl, Ta) von Ultraschall-Sendeimpulsen zu einem Hindernis (7) und zurück ausgewertet wird, mit mindestens einem Ultraschall-Sende/Empfänger (3), der von mindestens einem Oszillator (2) mit unterschiedlich langen Sendeimpulsen der Sendeimpulslänge (Ts) ansteuerbar ist, und wobei nach der Laufzeit (Tl, Ta) von Ultraschall- Sendeimpulsen zu einem Hindernis (7) und zurück das erste von dem Hindernis (7) reflektierte Echo empfangen wird, **dadurch gekennzeichnet, dass**
infolge der Sendeimpulse der Sendeimpulslänge (Ts) ein Diagnoseecho der Diagnoseecholänge (Td) empfangen wird, wobei sich die Diagnoseecholänge (Td) des Diagnoseechos aus den Sendeimpulsen des Ultraschall-Sende/Empfängers (3) und den Ausgangsimpulsen der mechanischen Nachschwingungen des Ultraschall-Sende/Empfängers (3) zusammensetzt, und dass
die Sendeimpulslänge der Sendeimpulse (Ts) so geregelt wird, dass die Diagnoseecholänge (Td) des Diagnoseechos etwa proportional zur Laufzeit (Tl, Ta) des vorhergehenden Sendeimpulses zu einem Hindernis (7) und zurück ist.

2. Verfahren zur Abstandsmessung gemäß Anspruch 1, **dadurch gekennzeichnet, dass**
a) bei einem Verhältnis von der Laufzeit (Ta) zu der Diagnoseecholänge (Td) des Diagnoseechos größer einem Grenzwert B die Sendeimpulslänge (Ts) bis zu einem maximalen Wert angehoben wird,
b) bei einem Verhältnis von der Laufzeit (Ta) zu der Diagnoseecholänge (Td) des Diagnoseechos zwischen zwei Grenzwerten A und B die Sendeimpulslänge (Ts) gleich gelassen wird, und
c) bei einem Verhältnis der Laufzeit (Ta) zu der Diagnoseecholänge (Td) des Diagnoseechos kleiner einem Grenzwert A die Sendeimpulslänge (Ts) bis zu einem minimalen Wert abgesenkt wird,
wobei der Grenzwert A kleiner als der Grenzwert B ist und wobei die Laufzeit (Ta) zwischen dem Zeitpunkt (t2) des Endes des Diagnoseechos und dem Zeitpunkt (t4) des ersten Nutzechos gebildet wird.

3. Verfahren nach einem der Ansprüche 1 oder 2,
**dadurch gekennzeichnet, dass** es zur Messung des Abstandes zwischen einem rückwärts fahrenden Nutzfahrzeug und einem Hindernis (7) benutzt wird.

## Claims

1. Method for distance measurement by means of ultrasound, wherein a travel time (T1, Ta) of ultrasound transmit pulses to an obstacle (7) and back is evaluated, having at least one ultrasound transceiver (3), which can be driven by at least one oscillator (2) using transmit pulses of differing transmit pulse length (Ts), and wherein after the travel time (T1, Ta) of ultrasound transmit pulses to an obstacle (7) and back, the first echo reflected by the obstacle (7) is received, **characterized in that** as a result of the transmit pulses of transmit pulse length (Ts), a diagnostic echo of diagnostic echo length (Td) is received, wherein the diagnostic echo length (Td) of the diagnostic echo is composed of the transmit pulses of the ultrasound transceiver (3) and the output pulses from the mechanical post-oscillations of the ultrasound transceiver (3), and **in that** the transmit pulse length (Ts) of the transmit pulses is regulated such that the diagnostic echo length (Td) of the diagnostic echo is approximately proportional to the travel time (T1, Ta) of the previous transmit pulse to an obstacle (7) and back.

2. Method for distance measurement according to Claim 1, **characterized in that**
a) when a ratio of the travel time (Ta) to the diagnostic echo length (Td) of the diagnostic echo is greater than a limit value B, the transmit pulse length (Ts) is increased to a maximum value,
b) when a ratio of the travel time (Ta) to the diagnostic echo length (Td) of the diagnostic echo is between two limit values A and B, the transmit pulse length (Ts) is left the same, and
c) when a ratio of the travel time (Ta) to the diagnostic echo length (Td) of the diagnostic echo is less than a limit value A, the transmit pulse length (Ts) is decreased to a minimum value,
wherein the limit value A is less than the limit value B, and wherein the travel time (Ta) is formed between the time (t2) of the end of the diagnostic echo and the time (t4) of the first wanted echo.

3. Method according to either of Claims 1 or 2, **characterized in that** it is used to measure the distance between a reversing commercial vehicle and an obstacle (7).

## Revendications

1. Procédé de mesure de distance au moyen d'ultrasons, dans lequel on analyse une durée de parcours (Tl, Ta) d'impulsions d'émission ultrasoniques vers un obstacle (7) et retour, avec au moins un émetteur/récepteur d'ultrasons (3) pouvant être commandé par au moins un oscillateur (2) avec des longueurs différentes des impulsions d'émission de longueur d'impulsion d'émission (Ts), et dans lequel on reçoit le premier écho réfléchi par l'obstacle (7) après la durée de parcours (Tl, Ta) d'impulsions d'émission ultrasoniques vers un obstacle (7) et retour,
**caractérisé en ce que** suite aux impulsions d'émission de longueur d'impulsion d'émission (Ts), on reçoit un écho diagnostique de longueur d'écho diagnostique (Td), dans lequel la longueur d'écho diagnostique (Td) de l'écho diagnostique provenant des impulsions d'émission de l'émetteur/récepteur d'ultrasons (3), s'assemble avec les impulsions de sortie des oscillations mécaniques de relaxation de l'émetteur/récepteur d'ultrasons (3), et
**en ce que** la longueur d'impulsion d'émission des impulsions d'émission (Ts) est réglée de telle sorte que la longueur d'écho diagnostique (Td) de l'écho diagnostique soit approximativement proportionnelle à la durée de parcours (Tl, Ta) de l'impulsion d'émission précédente vers un obstacle (7) et retour.

2. Procédé de mesure de distance selon la revendication 1, **caractérisé en ce que**
a) pour un rapport de la durée de parcours (Ta) sur la longueur d'écho diagnostique (Td) de l'écho diagnostique supérieur à une valeur limite B, on relève la longueur d'impulsion d'émission (Ts) jusqu'à une valeur maximale,
b) pour un rapport de la durée de parcours (Ta) sur la longueur d'écho diagnostique (Td) de l'écho diagnostique situé entre deux valeurs limites A et B, on conserve la même longueur d'impulsion d'émission (Ts), et
c) pour un rapport de durée de parcours (Ta) sur la longueur d'écho diagnostique (Td) de l'écho diagnostique inférieur à une valeur limite A, on abaisse la longueur d'impulsion d'émission (Ts) jusqu'à une valeur minimale,
la valeur limite A étant inférieure à la valeur limite B et la durée de parcours (Ta) étant constituée entre l'instant (t2) de la fin de l'écho diagnostique et l'instant (t4) du premier écho utile.

3. Procédé selon l'une des revendications 1 et 2, **caractérisé en ce qu'**il est utilisé pour la mesure de la distance entre un véhicule utilitaire reculant et un obstacle (7).
